(19) Europäisches Patentamt
European Patent Office
Office européen des brevets

(11) **EP 3 080 885 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(51) Int Cl.:
*H02H 9/00* (2006.01)     *H02H 3/50* (2006.01)
*H02H 1/00* (2006.01)

(21) Anmeldenummer: **14705116.3**

(22) Anmeldetag: **14.02.2014**

(86) Internationale Anmeldenummer:
**PCT/EP2014/052888**

(87) Internationale Veröffentlichungsnummer:
**WO 2015/120898 (20.08.2015 Gazette 2015/33)**

(54) **VERFAHREN UND EINRICHTUNG ZUM ERZEUGEN EINES DAS VORLIEGEN EINER FERRORESONANZSCHWINGUNG IN EINER ELEKTRISCHEN ANLAGE ANGEBENDEN RESONANZSIGNALS**

METHOD AND DEVICE FOR GENERATING A RESONANCE SIGNAL INDICATING THE PRESENCE OF A FERRORESONANT OSCILLATION IN AN ELECTRICAL SYSTEM

PROCÉDÉ ET ÉQUIPEMENT DE GÉNÉRATION D'UN SIGNAL DE RÉSONANCE INDIQUANT LA PRÉSENCE D'UNE OSCILLATION FERRORÉSONANTE DANS UNE INSTALLATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.10.2016 Patentblatt 2016/42**

(73) Patentinhaber: **Siemens Aktiengesellschaft 80333 München (DE)**

(72) Erfinder:
• **REBIZANT, Waldemar**
  **PL-53-678 Wroclaw (PL)**
• **SOLAK, Krzysztof**
  **PL-55-330 Miekinia (PL)**
• **WISZNIEWSKI, Andrzej**
  **PL-51-144 Wroclaw (PL)**
• **KEREIT, Matthias**
  **12159 Berlin (DE)**

(56) Entgegenhaltungen:
**EP-A1- 2 128 950      WO-A1-2011/150985**
**JP-A- H10 243 549      US-A- 4 713 553**

**Beschreibung**

Die Erfindung betrifft ein Verfahren zum Erzeugen eines das Vorliegen einer Ferroresonanzschwingung in einer elektrischen Anlage angebenden Resonanzsignals, bei dem digitale Spannungsmesswerte erfasst werden, die eine an einer Messstelle der elektrischen Anlage vorliegende Spannung angeben, die Abfolge der digitalen Spannungsmesswerte auf das Vorliegen einer Ferroresonanzschwingung in der elektrischen Anlage untersucht wird und bei Vorliegen einer Ferroresonanzschwingung das Resonanzsignal erzeugt wird, und die digitalen Spannungsmesswerte unter Bildung gefilterter Spannungsmesswerte mit einem digitalen Filter gefiltert werden. Die Erfindung betrifft auch eine entsprechend ausgebildete Einrichtung.

Ein solches Verfahren ist z. B. aus der JP H10 243549 A bekannt.

Sogenannte Ferroresonanzschwingungen (auch als "Kippschwingungen" bezeichnet) können in solchen elektrischen Anlagen, wie z.B. elektrischen Energieversorgungsnetzen, auftreten, in denen eine nichtlineare Induktivität (z.B. eine Spule eines Transformators oder eines Messwandlers) elektrisch parallel zu einer Kapazität (z.B. einer Kapazität der elektrischen Anlage) geschaltet ist. Meistens treten Ferroresonanzschwingungen in elektrischen Anlagen in Form von elektrischen Verteilnetzen mit isoliertem oder gelöschtem Sternpunkt auf, in denen Spannungswandler parallel zur Nullsystemkapazität des Verteilnetzes angeordnet sind. Ferroresonanzschwingungen werden in diesem Fall häufig dann ausgelöst, wenn der Eisenkern des Spannungswandlers während des Bestehens der Verbindung mit der Nullsystemkapazität in Sättigung geht. Dies tritt beispielsweise infolge einer sprunghaften Änderung der Spannung, z.B. einer Schalthandlung, in der elektrischen Anlage auf. Die entstehenden nichtlinearen Schwingungen zeichnen sich unter anderem durch Überspannungen, Überströme und das Auftreten von harmonischen und subharmonischen Frequenzen aus und stellen eine Gefahr für die Primär- und Sekundärtechnik der elektrischen Anlage dar. Überströme erzeugen hierbei hohe thermische Belastungen, während durch Überspannung hohe elektrische Belastungen der Komponenten der elektrischen Anlage erzeugt werden. Häufig ist die Beschädigung oder sogar Zerstörung von Spannungswandlern oder anderen Komponenten der elektrischen Anlage die Folge einer Ferroresonanzschwingung. Außerdem kann durch die gestörten Strom- bzw. Spannungssignale der Betrieb von die elektrische Anlage überwachenden Schutzgeräten gestört werden.

Aus diesem Grund ist es von hoher Bedeutung, das Vorliegen einer Ferroresonanzschwingung zuverlässig zu erkennen, um geeignete Gegenmaßnahmen ergreifen zu können. Allerdings ist die Erkennung solcher Ferroresonanzschwingungen aufgrund ihres nichtlinearen und zufälligen bzw. chaotischen Wesens nicht einfach zu bewerkstelligen. Hinzu kommt, dass zur Gewährleistung einer selektiven Erkennung von Kurzschlüssen und anderen elektrischen Fehlern in der elektrischen Anlage eine zuverlässige Unterscheidung von auf Ferroresonanz zurückgehenden Störungen und Fehlerzuständen in jedem Fall sichergestellt sein muss.

Einige Ansätze zur Erkennung von Ferroresonanzschwingungen basieren auf der Untersuchung von Frequenzkomponenten eines an einer Messstelle der elektrischen Anlage aufgenommenen Spannungssignals unter Verwendung einer sogenannten "Wavelet Analyse". Solche Ansätze sind beispielsweise in den Konferenzbeiträgen "On the use of wavelet decomposition for ferroresonance detection in power system" (Z. Bo, L. Tiecheng; Power and Energy Engineering Conference, Asia-Pacific; IEEE 2009) oder "Wavelet based kernel fisher classifier for ferroresonance identification" (G. Mokryani, M.-R. Haghifam, H. Latafat, P. Aliparast, A. Abdolahi; The 15th International Conference on Intelligent System Applications to Power Systems; IEEE 2009) beschrieben. Die zugehörigen Algorithmen zur Entscheidung über das Vorhandensein einer Ferroresonanzschwingung sind jedoch sehr komplex und stellen hohe Rechenkapazitätsanforderungen an eine Einrichtung zur Durchführung der Entscheidung.

Ein Verfahren bzw. eine Einrichtung der eingangs genannten Art sind zudem aus der internationalen Patentanmeldung WO 2011/150985 A1 bekannt, gemäß der aus einer an einer Messstelle der elektrischen Anlage aufgenommenen Spannung durch Integration und Eliminierung der Gleichstromkomponente ein magnetischer Fluss bestimmt wird. Bei Vorhandensein eines zu großen magnetischen Flusses wird über eine Fuzzy-Logik für verschiedene Frequenzanteile ein Ferroresonanz-Modus ermittelt. Auch die in der WO 2011/150985 A1 beschriebene Methode stellt für ihre Implementierung in eine Einrichtung zur Erkennung des Vorhandenseins einer Ferroresonanzschwingung hohe Anforderungen an dessen Rechenkapazität.

Der Erfindung liegt daher die Aufgabe zugrunde, ein Verfahren anzugeben, mit dem mit vergleichsweise niedrigen gerätetechnischen Aufwand, insbesondere bei niedrigen Anforderungen an die Rechenkapazität, eine Entscheidung über das Vorliegen einer Ferroresonanzschwingung in einer elektrischen Anlage getroffen werden kann. Der Erfindung liegt außerdem die Aufgabe zugrunde, eine entsprechende Einrichtung zur Erkennung des Vorliegens einer Ferroresonanzschwingung in einer elektrischen Anlage anzugeben.

Hinsichtlich des Verfahrens wird diese Aufgabe gelöst durch ein Verfahren der eingangs genannten Art, bei dem bezüglich solcher gefilterter Spannungsmesswerte, die eine halbe Schwingungsdauer der Spannung beschreiben, ein die Amplitude der Spannung während dieser halben Schwingungsdauer angebender Amplitudenwert bestimmt wird, der Amplitudenwert mit einem Schwellenwert verglichen wird, und das Resonanzsignal erzeugt wird, wenn der Amplitudenwert den Schwellenwert übersteigt.

Dem erfindungsgemäßen Verfahren liegt unter anderem die Erkenntnis zugrunde, dass durch eine geeignete Filterung der digitalen Spannungsmesswerte eine elektrische Größe erzeugt werden kann, die eine Angabe über eine Belastung der induktiven elektrischen Komponenten infolge eines magnetischen Flusses ermöglicht. Hierzu wird jeweils für eine halbe Schwingungsdauer die Amplitude der Abfolge der gefilterten Spannungsmesswerte untersucht. Die halbe Schwingungsdauer wird dabei nicht auf die Nennfrequenz der Spannung, sondern auf die tatsächlich auftretende Schwingung des Spannungssignals, die ggf. durch eine Ferroresonanzschwingung hervorgerufen wird, bezogen.

Die digitalen Spannungsmesswerte stellen hierbei insbesondere eine Nullspannung der elektrischen Anlage angebende Spannungsmesswerte dar; die Nullspannung kann hierbei entweder direkt gemessen oder aus den gemessenen Phasenspannungen durch Berechnung bestimmt werden.

Um auch bei negativen Halbwellen eine vorliegende Ferroresonanzschwingung erkennen zu können, wird zum Vergleich mit dem Schwellenwert zudem entweder der Betrag des Amplitudenwertes mit dem Schwellenwert verglichen, oder der Schwellenwert ist im Falle einer negativen Halbwelle entsprechend ebenfalls mit einem negativen Vorzeichen zu versehen; eine Schwellenwertverletzung wird in diesem Fall dann festgestellt, wenn der negative Amplitudenwert den negativen Schwellenwert unterschreitet.

Der Wert des Schwellenwertes kann z.B. durch Netzsimulationen oder Experimente ermittelt werden. Üblicherweise kann er z.B. im Bereich von 0,01 bis 0,03 liegen. Der Schwellenwert kann als Einstellparameter für eine das Verfahren ausführende Einrichtung vorgegeben werden.

Dadurch dass bei dem erfindungsgemäßen Verfahren nicht der exakte magnetische Fluss berechnet wird, sondern nur durch geeignete Filterung eine angenäherte Größe ermittelt wird, kommt das erfindungsgemäße Verfahren ohne hohe Anforderungen an die Rechenkapazität einer das Verfahren durchführenden Einrichtung aus. Eine weitere Vereinfachung der Auswertung im Vergleich zu den im Stand der Technik beschriebenen Methoden besteht darin, dass lediglich die Amplitude der Abfolge von gefilterten Spannungsmesswerten zur Entscheidung über das Vorliegen einer Ferroresonanzschwingung herangezogen werden muss; eine aufwendige Analyse verschiedener Frequenzspektren unter Heranziehung einer Fuzzy-Logik ist hingegen nicht vonnöten.

Eine vorteilhafte Ausführungsform des erfindungsgemäßen Verfahrens sieht vor, dass als digitaler Filter ein Filter mit einer Tiefpasscharakteristik verwendet wird.

Ein solcher Tiefpassfilter eignet sich besonders zur Erzeugung von gefilterten Spannungsmesswerten, die zur Entscheidung über das Vorliegen einer Ferroresonanzschwingung herangezogen werden können.

Konkret kann hierbei vorgesehen sein, dass der digitale Filter eine Tiefpasscharakteristik erster Ordnung aufweist.

Beispielsweise kann die Übertragungsfunktion H(s) des digitalen Filters im Laplace-Bereich wie folgt aussehen:

$$H(s) = \frac{T_a}{T_a s + 1} \ . \qquad (1a)$$

Hieraus ergibt sich, dass die gefilterten Spannungsmesswerte F(s) im Laplace-Bereich wie folgt gebildet werden:

$$F(s) = \frac{T_a U_d(s)}{T_a s + 1} \qquad (1b)$$

Hierbei stehen $T_a$ für die Filter-Zeitkonstante (beispielsweise kann $T_a$ = 0,005s gewählt werden) und $U_d(s)$ für das analoge Messspannungssignal im Laplace-Bereich.

Im Zeitbereich sieht die entsprechende Gleichung zur Ermittlung der gefilterten digitalen Spannungsmesswerte f(n) mit Approximation durch ein implizites Euler-Verfahren (Euler's backward approximation) wie folgt aus:

$$f(n) = \frac{T_a}{T_a + T_s} \big( f(n-1) + T_s u_d(n) \big) \ . \qquad (2)$$

Hierbei stehen zusätzlich zur obigen Beschreibung n für die Zählvariable der gefilterten Spannungsmesswerte (n=1, 2, 3, ...), $u_d(n)$ für den n-ten digitalen Spannungsmesswert im Zeitbereich und $T_s$ für das bei der Digitalisierung der Spannungsmesswerte verwendete Abtastintervall (beispielsweise kann $T_s$=0,001s gewählt werden).

Durch die Verwendung eines Tiefpassfilters erster Ordnung in Kombination mit der Euler-Approximation können gefilterte Spannungsmesswerte in der Form erzeugt werden, die näherungsweise eine Aussage über den in einer Induktivität der elektrischen Anlage auftretenden magnetischen Fluss zulassen.

Gemäß einer weiteren vorteilhaften Ausführungsform des erfindungsgemäßen Verfahrens ist zudem vorgesehen, dass die digitalen Spannungsmesswerte aus einem Messspannungssignal gebildet werden, das an einer Sekundärseite eines Spannungswandlers abgegriffen wird.

Dabei kann es sich beispielsweise um einen Spannungswandler mit nichtlinearer Induktivität handeln, die bei bestimmten Betriebszuständen der elektrischen Anlage dazu neigt, in die Sättigung zu gehen.

Besonders vorteilhaft kann hierbei vorgesehen sein, dass ein Spannungswandler mit einer als offene Dreiecksschaltung ausgebildeten Sekundärseite verwendet wird.

Solche Spannungswandler werden oftmals in elektrischen Anlagen eingesetzt, um eine Nullspannungsmessung durchzuführen. Ihre Nullsysteminduktivität ist daher parallel zu einer Nullsystemkapazität angeordnet und kann unter den eingangs beschriebenen Voraussetzungen in Sättigung gehen. Es ist jedoch auch möglich, die Spannung mit einem anders aufgebauten Spannungswandler zu bestimmen. Soll für die Resonanzschwingungserkennung beispielsweise die Nullsystemspannung ausgewertet werden, so kann diese auch aus den Messspannungssignalen der einzelnen Phasenspannungen berechnet werden.

Gemäß einer weiteren vorteilhaften Ausführungsform des erfindungsgemäßen Verfahrens ist vorgesehen, dass die Abfolge der gefilterten Spannungsmesswerte vor der Bestimmung des jeweiligen Amplitudenwertes mit einem digitalen Bandpassfilter hinsichtlich ihrer Frequenzbandbreite begrenzt wird.

Durch Verwendung eines geeigneten Bandpassfilters kann das für das Auftreten von Ferroresonanzschwingungen relevante Frequenzband gezielt für deren Erkennung herangezogen werden. Beispielsweise können einerseits die Gleichstromkomponenten und andererseits die Nennfrequenz der elektrischen Anlage (z.B. 50Hz oder 60Hz) sowie darüber liegende Frequenzen unterdrückt werden. Als Bandpassfilter kann beispielsweise ein FIR-Filter mit einem sinusförmigen Fenster und einer Mittenfrequenz von der halben Nennfrequenz (z.B. 25Hz bei $f_{nenn}$=50Hz) verwendet werden. Die Fensterlänge kann hierbei beispielsweise N=40 bei einer Abtastfrequenz von $f_s$ = 1000Hz betragen. Die Filterkoeffizienten können beispielsweise gemäß der folgenden Gleichung gewählt werden:

$$h_s(k) = \frac{\sin\left[(k+0{,}5)\cdot\Omega_0\right]}{\frac{1}{2}N} \, . \qquad (3)$$

Hierbei stehen k für den Zählindex (k=0,1,2,...,N-1), N für die Fensterlänge, und $\Omega_0$ für die auf die Abtastfrequenz $f_s$ normierte Mittenfrequenz des Bandpassfilters, die gemäß

$$\Omega_0 = \frac{2\cdot\pi\cdot\frac{1}{2}f_{nenn}}{f_s} \qquad (4)$$

bestimmt wird. Die den Bandpassfilter verlassende bandbreitenbegrenzte Abfolge von gefilterten Spannungsmesswerten $f_F(n)$ ergibt sich somit zu:

$$f_F(n) = \sum_{j=0}^{N-1} f(n-j)\cdot h_s(j) \, . \qquad (5)$$

Hierbei steht j für den Summationsindex.

Konkret kann in diesem Zusammenhang vorgesehen sein, dass der Bandpassfilter die Bandbreite auf ein Frequenzband zwischen etwa 0Hz und etwa der Nennfrequenz $f_{nenn}$ der Spannung der elektrischen Anlage begrenzt. Vorzugsweise sollten die Frequenzen 0Hz und die Nennfrequenz $f_{nenn}$ der elektrischen Anlage (z.B. 50Hz) außerhalb des durchgelassenen Frequenzbandes liegen.

Eine weitere vorteilhafte Ausführungsform des erfindungsgemäßen Verfahrens sieht vor, dass das Resonanzsignal erst dann erzeugt wird, wenn eine erste vorgegebene Anzahl von aufeinanderfolgenden Amplitudenwerten den Schwellenwert übersteigt.

Hierdurch kann das Verfahren in der Weise gegen Fehlmessungen stabilisiert werden, dass nicht unmittelbar beim Auftreten des ersten Anzeichens für eine Ferroresonanzschwingung (also ein den Schwellenwert überschreitender Amplitudenwert) das Resonanzsignal erzeugt wird. Das Resonanzsignal wird nämlich nur dann erzeugt, wenn eine z.B. als Einstellparameter vorgebbare erste Anzahl von aufeinanderfolgenden Amplitudenwerten den Schwellenwert überschreitet. Die erste Anzahl kann z.B. auf den Wert 100 eingestellt werden, in diesem Fall müsste bei einer Abtastfrequenz

$f_s$ von 1000Hz eine Schwellenwertüberschreitung über eine Dauer von 100ms festgestellt werden, bevor die Ferroresonanzschwingung endgültig festgestellt und das Resonanzsignal erzeugt wird. Der Einstellparameter kann hierbei anstelle durch direkte Festlegung einer konkreten Anzahl von aufeinanderfolgenden Amplitudenwerten auch durch eine Zeitdauer angegeben werden, während der die Schwellenwertüberschreitung vorliegen muss. Aus dieser Zeitdauer kann dann in einfacher Weise bei bekannter Abtastfrequenz $f_s$ auf die notwendige Anzahl aufeinanderfolgender Amplitudenwerte geschlossen werden.

Eine weitere vorteilhafte Ausführungsform des erfindungsgemäßen Verfahrens sieht zudem vor, dass ein vorliegendes Resonanzsignal erst dann zurückgenommen wird, wenn eine zweite vorgegebene Anzahl von aufeinanderfolgenden Amplitudenwerten den Schwellenwert unterschreitet.

Auf diese Weise kann vorteilhaft ein "flackerndes Verhalten" des Resonanzsignals vermieden werden, da ein einmal erzeugtes Signal gemäß dieser Ausführungsform immer für eine Mindestzeitdauer ansteht, auch wenn mittlerweile die Schwellenwertüberschreitung beendet worden ist. Dies ist insbesondere dann vorteilhaft, wenn das Resonanzsignal zur Aktivierung einer Gegenmaßnahme gegen die Ferroresonanzschwingung, beispielsweise das Auslösen einer Schalthandlung, eingesetzt werden soll. Ein zu kurz erzeugtes Resonanzsignal könnte hierbei ungewollt nicht zur Aktivierung führen. Die zweite Anzahl kann z.B. auf den Wert 160 eingestellt werden, in diesem Fall wird bei einer Abtastfrequenz $f_s$ von 1000Hz das Resonanzsignal erst dann zurückgenommen, wenn eine Schwellenwertunterschreitung über eine Dauer von 160ms festgestellt wurde. Der Einstellparameter kann hierbei anstelle durch direkte Festlegung einer konkreten Anzahl von aufeinanderfolgenden Amplitudenwerten auch durch eine Zeitdauer angegeben werden, während der die Schwellenwertunterschreitung vorliegen muss. Aus dieser Zeitdauer kann dann in einfacher Weise bei bekannter Abtastfrequenz $f_s$ auf die notwendige Anzahl aufeinanderfolgender Amplitudenwerte geschlossen werden.

Eine weitere vorteilhafte Ausführungsform des erfindungsgemäßen Verfahrens sieht vor, dass der Amplitudenwert jeweils unter Einbeziehung einer durch die gefilterten digitalen Spanungsmesswerte einer halben Schwingungsdauer charakterisierten Fläche bestimmt wird.

Im Falle einer konstanten Schwingungsdauer $T_x$ der untersuchten Abfolge von gefilterten Spannungsmesswerten $f_F(n)$ kann die Amplitude $A(n)$ der Abfolge nämlich generell wie folgt berechnet werden:

$$A(n) = \pi \cdot \frac{f_{nenn}}{2} \cdot T_s \cdot \sum_{k=0}^{\frac{f_s \cdot T_x}{2}-1} \left| f_F(n-k) \right| . \qquad (6)$$

Hierbei stehen $T_x$ für die (zunächst als konstant angenommene) Schwingungsdauer der Abfolge der gefilterten Spannungsmesswerte $f_F(n)$ und k für den Summationsindex. Die Summation ersetzt für die digitale Implementierung der Gleichung ein Integral und beschreibt die zwischen der Abfolge der gefilterten Spannungsmesswerte $f_F(n)$ und der Abszisse liegende Fläche. Der Gleichung für die Amplitude liegt die Erkenntnis zugrunde, dass das Integral (bzw. die Summe) eines gleichgerichteten Signals über die halbe Schwingungsdauer des Signals proportional zu dessen Amplitude ist. Die Verwendung der halben Nennfrequenz $f_{nenn}$ zur Bildung der Amplitude $A(n)$ ergibt sich zudem aus der Annahme, dass bei Betrachtung eines Frequenzbereichs zwischen 0Hz und der Nennfrequenz $f_{nenn}$ (z.B. durch eine vorhergehende Bandbreitenbegrenzung mit einem Bandpassfilter) die Abfolge bei der halben Nennfrequenz $f_{nenn}$ die größte Verstärkung erfährt.

Die obere Summationsgrenze beschreibt die halbe Fensterlänge bei Annahme einer konstanten Schwingungsdauer $T_x$.

Da im Falle des Vorliegens einer Ferroresonanzschwingung oder einer anderen Störung die untersuchte Abfolge gefilterter Spannungsmesswerte üblicherweise keine feste Schwingungsdauer hat, wird gemäß einer vorteilhaften Ausführungsform des erfindungsgemäßen Verfahrens in diesem Zusammenhang vorgeschlagen, dass zur Ermittlung des Amplitudenwertes jeweils die Dauer einer halben Schwingungsdauer ermittelt wird, indem die Abfolge der gefilterten Spannungsmesswerte auf Nulldurchgänge untersucht wird.

Auf diese Weise kann auch für eine nicht konstante Schwingungsdauer der Abfolge der gefilterten Spanungsmesswerte eine Amplitudenbestimmung gemäß der oben genannten Gleichung durchgeführt werden, indem der veränderliche Wert für $T_x$ jeweils aktuell neu bestimmt wird. Hierzu wird die Abfolge der gefilterten Spannungsmesswerte auf Nulldurchgänge untersucht und die halbe Schwingungsdauer $T_x/2$ als diejenige Zeitdauer bestimmt, die zwischen zwei Nulldurchgängen liegt.

Das Resonanzsignal kann auf verschiedene Weisen zur Stabilisierung der elektrischen Anlage genutzt werden.

Gemäß einer Ausführungsform kann beispielsweise vorgesehen sein, dass eine Schutzfunktion eines die elektrische Anlage überwachenden elektrischen Schutzgerätes blockiert wird, solange das Resonanzsignal vorliegt.

Hierdurch kann erreicht werden, dass während des Vorliegens einer Ferroresonanzschwingung ein die elektrische Anlage überwachendes Schutzgerät bei der Durchführung seiner Schutzalgorithmen keine Fehlentscheidung trifft, die z.B. zu einer ungewollten Abschaltung eines Teils der elektrischen Anlage führen könnte.

Alternativ oder zusätzlich kann gemäß einer weiteren vorteilhaften Ausführungsform des erfindungsgemäßen Verfahrens vorgesehen sein, dass bei vorliegendem Resonanzsignal eine Alarmmeldung an einen Betreiber der elektrischen Anlage übermittelt wird.

Auf diese Weise kann der Betreiber der elektrischen Anlage unmittelbar über den Zustand der elektrischen Anlage informiert werden und ggf. manuelle Gegenmaßnahmen einleiten. Weiterhin kann alternativ oder zusätzlich zu den beiden letztgenannten Ausführungsformen des erfindungsgemäßen Verfahrens vorgesehen sein, dass bei vorliegendem Resonanzsignal eine in der elektrischen Anlage vorgesehene Dämpfungseinrichtung aktiviert wird, die eine Dämpfung der Ferroresonanzschwingung bewirkt.

Auf diese Weise kann automatisch bei vorliegendem Resonanzsignal als Gegenmaßnahme eine Dämpfung eingeleitet werden. Beispielsweise kann hierzu ein entsprechend ausgelegter Widerstand zeitweise in die Anlage geschaltet werden, über den sich die Schwingung abbaut.

Die oben genannte Aufgabe wird auch gelöst durch eine Einrichtung zum Erzeugen eines das Vorliegen einer Ferroresonanzschwingung in einer elektrischen Anlage angebenden Resonanzsignals, mit einer Messeinrichtung zur Erfassung digitaler Spannungsmesswerte, die eine an einer Messstelle der elektrischen Anlage vorliegende Spannung angeben, und einer Auswerteeinrichtung zur Untersuchung der Abfolge der digitalen Spannungsmesswerte auf das Vorliegen einer Ferroresonanzschwingung in der elektrischen Anlage und zur Erzeugung des Resonanzsignals bei Vorliegen einer Ferroresonanzschwingung.

Erfindungsgemäß ist vorgesehen, dass die Auswerteeinrichtung zur Durchführung eines Verfahrens gemäß einem der Ansprüche 1 bis 14 ausgebildet ist.

Hinsichtlich der erfindungsgemäßen Einrichtung gelten alle zu dem erfindungsgemäßen Verfahren voranstehend und nachfolgend gemachten Ausführungen und umgekehrt, insbesondere ist die erfindungsgemäße Einrichtung zur Durchführung des erfindungsgemäßen Verfahrens in jeder beliebigen Ausführungsform oder eine Kombination beliebiger Ausführungsformen eingerichtet. Auch hinsichtlich der Vorteile der erfindungsgemäßen Einrichtung wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen

Figur 1        eine schematische Ansicht einer hinsichtlich des Auftretens einer Ferroresonanzschwingung überwachten elektrischen Anlage;

Figur 2        ein Ablaufschema zur Erläuterung eines Ausführungsbeispiels zur Erkennung des Vorliegens einer Ferroresonanzschwingung;

Figur 3        ein Diagramm mit einem beispielhaften Frequenzgang eines Bandpassfilters;

Figur 4        ein Diagramm mit einer schematisch angedeuteten Abfolge von gefilterten Spanungsmesswerten zur Erläuterung eines Verfahrens zur Ermittlung der jeweiligen Schwingungsdauer;

Figur 5        ein Ablaufschema zur Erläuterung eines Ausführungsbeispiels zur Ermittlung eines jeweiligen Amplitudenwertes der Abfolge von gefilterten Spanungsmesswerten;

Figuren 6-9        Diagramme zur Erläuterung der Auswertung einer ersten beispielhaften Abfolge von Spanungsmesswerten hinsichtlich des Vorliegens einer Ferroresonanzschwingung;

Figuren 10-13        Diagramme zur Erläuterung der Auswertung einer zweiten beispielhaften Abfolge von Spanungsmesswerten hinsichtlich des Vorliegens einer Ferroresonanzschwingung; und

Figuren 14-17        Diagramme zur Erläuterung der Auswertung einer dritten beispielhaften Abfolge von Spanungsmesswerten hinsichtlich des Vorliegens einer Ferroresonanzschwingung.

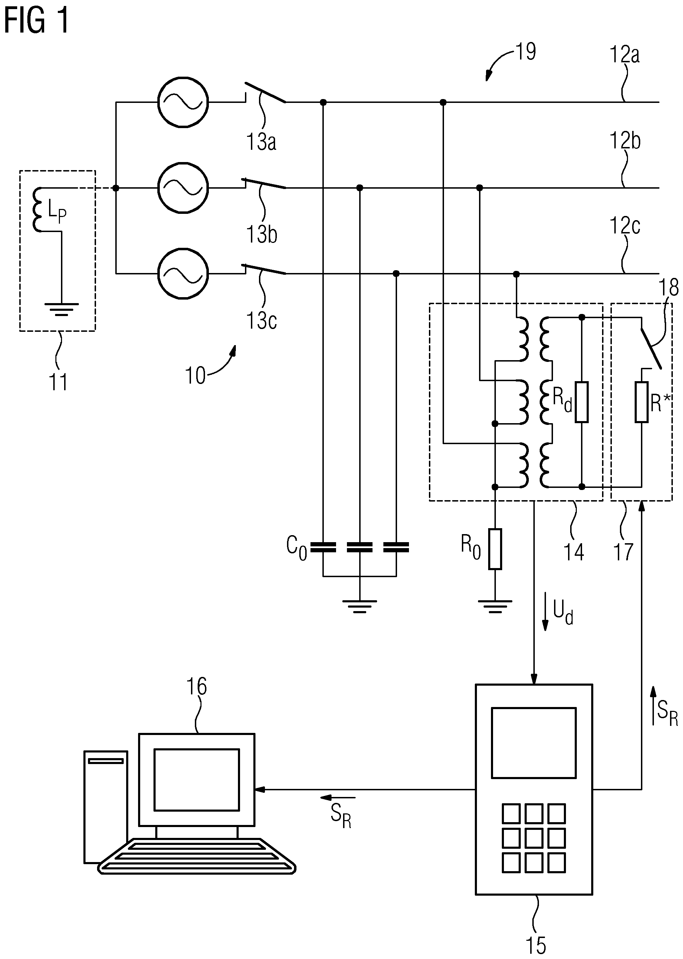

Figur 1 zeigt in lediglich beispielhafter schematischer Ansicht eine elektrische Anlage 10 in Form eines dreiphasigen elektrischen Energieversorgungsnetzes mit isoliertem oder gelöschtem Sternpunkt. Im Falle eines gelöschten Sternpunktes findet die Sternpunkterdung über eine Löscheinrichtung 11 mit der Induktivität $L_P$, z.B. eine sogenannte Petersen-Spule, statt. Die elektrische Anlage 10 weist drei Phasenleiter 12a-c auf, die gemeinsam gegen Erde eine in Figur 1 lediglich schematisch angedeutete Nullsystemkapazität $C_0$ aufweisen. In den einzelnen Phasenleitern 12a-c sind Schalteinrichtungen 13a-c, z.B. Leistungsschalter, angeordnet, die die Phasenleiter selektiv von der restlichen elektrischen Anlage trennen zu können, um z.B. Fehlerströme abzuschalten.

Die Phasenleiter 12a-c sind zudem zur Messung einer Nullsystemspannung an einer Messstelle 19 mit den Wicklungen eines Spanungswandlers 14 verbunden. Der Spanungswandler 14 weist hierzu primärseitig in einer Sternschaltung verschaltete Wicklungen auf, die gemeinsam die in Figur 1 lediglich schematisch angedeutete Nullsystemim-pedanz $R_0$ darstellen. Die Sekundärseite des Spannungswandlers ist in einer sogenannten offenen Dreiecksschaltung ("Open Delta") geschaltet; die Messspannung $U_d$ wird hierbei über dem Widerstand $R_d$ abgegriffen.

Beim Betrieb der elektrischen Anlage können unter bestimmten Bedingungen Ferroresonanzschwingungen entstehen. Hierbei schwingt die elektrische Energie sozusagen zwischen der Nullsystemkapazität $C_0$ der elektrischen Anlage und der durch den Spannungswandler 14 gebildeten Nullsystemimpedanz $R_0$. Eine Ferroresonanzschwingung entsteht hierbei insbesondere in Betriebszuständen, bei denen der Spannungswandler eine Sättigung aufweist und außerdem ein sprunghaftes Ereignis, z.B. das Öffnen oder Schließen der Schalteinrichtung 13a, auftritt. Die durch eine Ferroresonanzschwingung in der elektrischen Anlage hervorgerufenen hohen Ströme und Spannungen beinhalten ein hohes Gefahrenpotential; so können durch Überströme thermische Belastungen und durch Überspannungen elektrische Belastungen der elektrischen Anlage 10 auftreten und dort zu Beschädigungen oder Gefährdungen von Betriebspersonal führen. Es ist daher notwendig, das Vorliegen einer Ferroresonanzschwingung in der elektrischen Anlage 10 möglichst zeitnah und zuverlässig erkennen zu können. Erschwerend tritt hinzu, dass der Verlauf von Strom und Spannung in der elektrischen Anlage bei Vorliegen einer Ferroresonanzschwingung jedoch kein eindeutiges Muster annimmt und bisweilen sogar ein chaotisches Verhalten aufweist. Außerdem muss eine Ferroresonanzschwingung sicher von anderen Fehlerzuständen, z.B. einem transienten Erdfehler, unterschieden werden können.

Zur Erkennung des Vorliegens einer Ferroresonanzschwingung wird das mittels des Spannungswandlers 14 aufgenommene Messspannungssignal $U_d$ an eine Messeinrichtung einer Einrichtung 15, z.B. eines die elektrische Anlage überwachenden Schutzgerätes, übertragen und dort mittels einer Analog-DigitalUmsetzung in eine Abfolge von digitalen Spannungsmesswerten $u_d$ umgesetzt. Alternativ dazu kann die Analog-DigitalUmsetzung auch bereits schon außerhalb der Einrichtung 15, beispielsweise im Spanungswandler selbst oder einer daran angeschlossenen Messeinrichtung (z.B. einer Remote Terminal Unit oder einer Merging Unit) erfolgen.

Die Einrichtung 15 führt hinsichtlich der Abfolge von digitalen Spannungsmesswerten $u_d$ eine Untersuchung auf das Vorliegen einer Ferroresonanzschwingung durch und erzeugt bei erkannter Ferroresonanzschwingung ein Resonanzsignal $S_R$ ab. Dieses Resonanzsignal kann beispielsweise dazu verwendet werden, in der Einrichtung 15 selbst oder in anderen Schutzgeräten ablaufende Schutzalgorithmen zur Überwachung der elektrischen Anlage 10 zu blockieren, damit diese nicht anhand der gestörten Verläufe von Strömen und Spannungen in der elektrischen Anlage einen - tatsächlich nicht vorhandenen - Fehler erkennen und Teile der elektrischen Anlage (oder die gesamte Anlage) ungewollt abschalten. Alternativ oder zusätzlich kann das Resonanzsignal $S_R$ auch dazu verwendet werden, einem Betreiber der elektrischen Anlage eine Alarmmeldung zu übermitteln. Dazu kann das Resonanzsignal $S_R$ oder ein davon abgeleitetes Signal beispielsweise an eine die elektrische Anlage steuernde und überwachende Leitstelle 16 übermittelt werden. Außerdem kann alternativ oder zusätzlich das Resonanzsignal $S_R$ auch dazu verwendet werden, eine Dämpfungseinrichtung 17 in der elektrischen Anlage 10 zu aktivieren, um die Ferroresonanzschwingung aktiv zu dämpfen. Eine solche Dämpfungseinrichtung kann beispielsweise aus einem temporär über eine Schalteinrichtung 18 parallel zur dem Messwiderstand $R_d$ schaltbaren Dämpfungswiderstand R* bestehen, der den während der Ferroresonanzschwingung fließenden Strom dämpft.

Nachfolgend wird anhand eines Ausführungsbeispiels ein Verfahren zur Erkennung des Vorliegens einer Ferroresonanzschwingung in der elektrischen Anlage beschrieben. Das beschriebene Verfahren kann beispielsweise mittels einer in der Einrichtung 15 vorhandenen Auswerteeinrichtung durchgeführt werden. Die Verfahrensschritte selbst können hierbei mittels einer Software oder einer Hardware oder einer Kombination aus beidem in der Einrichtung 15 realisiert sein.

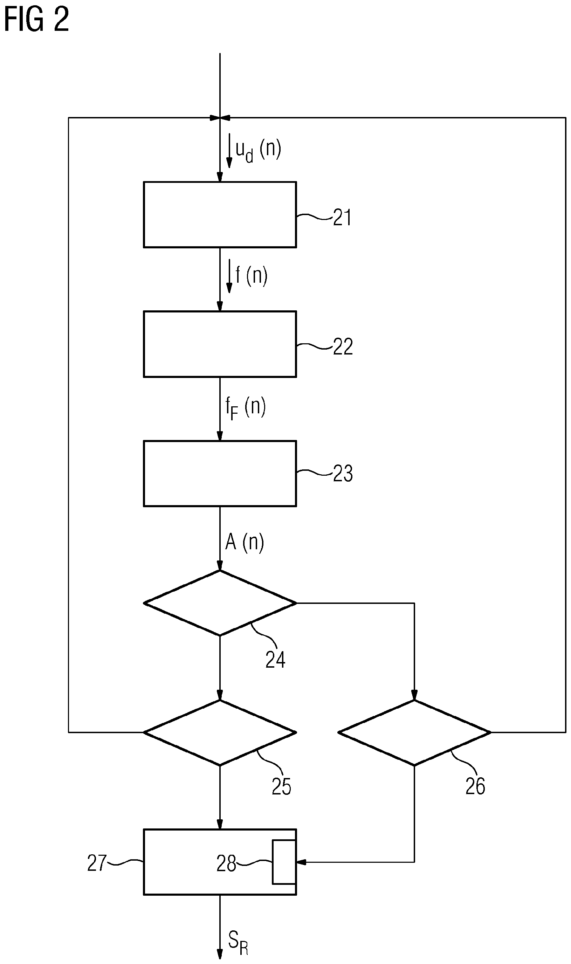

Figur 2 zeigt hierzu ein Ablaufschema des Ausführungsbeispiels des Verfahrens. Zunächst wird in einem ersten Schritt 21 eine Abfolge von aus dem Messspannungssignal $u_d$ gebildeten digitalen Messspannungswerten $u_d(n)$ einem digitalen Filter gefiltert. Bei dem digitalen Filter handelt es sich vorzugsweise um einen Filter erster Ordnung mit einer Tiefpasscharakteristik. Die am Ausgang des digitalen Filters abgegebene Folge von gefilterten digitalen Spannungsmesswerten f(n) stellt bei geeigneter Auslegung des digitalen Filters eine Größe dar, die proportional zu einem in dem Spannungswandler 14 (vgl. Figur 1) auftretenden magnetischen Fluss ist. Der digitale Filter kann mittels der folgenden, oben bereits näher erläuterten Gleichung (2)

$$f(n) = \frac{T_a}{T_a + T_s}\bigl(f(n-1) + T_s u_d(n)\bigr)$$

im Zeitbereich realisiert werden.

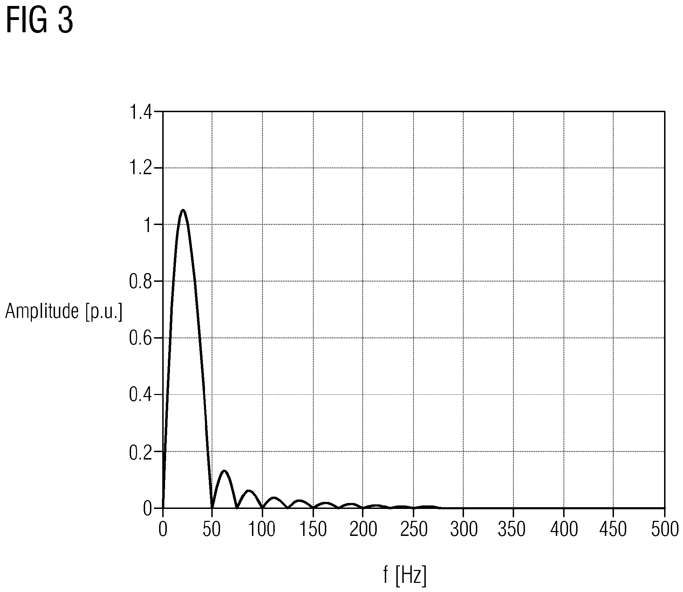

In einem nächsten Schritt 22 werden die gefilterten digitalen Spannungsmesswerte f(n) einem Bandpassfilter zugeführt, der eine Begrenzung des Frequenzbandes der Abfolge der gefilterten digitalen Spannungsmesswerte vorzugsweise auf einen Bereich zwischen etwa 0Hz (Gleichspannungsanteil) und etwa der Nennfrequenz, bei der die elektrische Anlage betrieben wird (z.B. 50Hz oder 60Hz), erfolgt. Dies erfolgt insbesondere deswegen, weil Untersuchungen von Ferroresonanzschwingungen ergeben haben, dass diese sich insbesondere durch dominante Frequenzanteile in diesem Bereich auszeichnen. Als Bandpassfilter kann beispielsweise ein FIR-Filter mit einem sinusförmigen Fenster verwendet werden, wie es für eine Nennfrequenz von 50Hz beispielhaft in der in Figur 3 gezeigten Frequenzantwort eines Bandpassfilters angedeutet ist. Die Fensterlänge kann hierbei beispielsweise N=40 bei einer Abtastfrequenz von $f_s = 1000$Hz betragen. Die Filterkoeffizienten können beispielsweise gemäß der oben bereits näher erläuterten Gleichung (3) gewählt werden:

$$ h_s(k) = \frac{\sin\left[(k+0{,}5)\cdot\Omega_0\right]}{\frac{1}{2}N} \, . $$

Die den Bandpassfilter verlassende bandbreitenbegrenzte Abfolge von gefilterten Spannungsmesswerten $f_F(n)$ lässt sich gemäß der ebenfalls oben bereits näher erläuterten Gleichung (5)

$$ f_F(n) = \sum_{j=0}^{N-1} f(n-j)\cdot h_s(j) \, . $$

beschreiben.

In einem nächsten Schritt 23 wird ein die Amplitude der Abfolge der bandbreitenbegrenzten gefilterten Spannungsmesswerte $f_F(n)$ angebender Amplitudenwert bestimmt. Dieser Amplitudenwert wird für jede Halbwelle der Abfolge, also für den während einer halben Schwingungsdauer durch die einzelnen gefilterten Spannungsmesswerte beschriebenen Verlauf, bestimmt.

Im Falle einer konstanten Schwingungsdauer $T_x$ der untersuchten Abfolge von gefilterten Spannungsmesswerten $f_F(n)$ kann der die Amplitude angebende Amplitudenwert $A(n)$ der Abfolge generell entsprechend der oben bereits erläuterten Gleichung (6) bestimmt werden:

$$ A(n) = \pi \cdot \frac{f_{nenn}}{2} \cdot T_s \cdot \sum_{k=0}^{\frac{f_s \cdot T_x}{2}-1} \left| f_F(n-k) \right| \, . $$

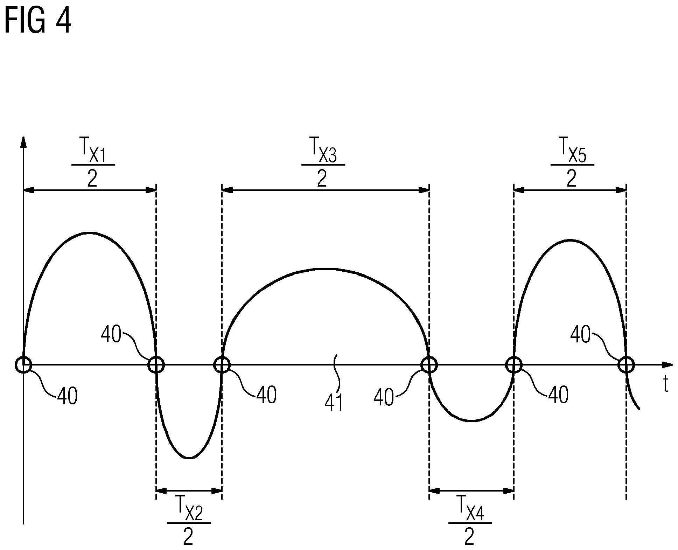

Wie in Figur 4 beispielhaft angedeutet kann im Falle des Vorliegens einer Ferroresonanzschwingung oder einer anderen Störung hinsichtlich der untersuchten Abfolge bandbreitenbegrenzter gefilterter Spannungsmesswerte $f_F(n)$ üblicherweise nicht von einer festen Schwingungsdauer $T_x$ ausgegangen werden. Vielmehr kann jeder Halbwelle eine eigene Schwingungsdauer $T_{x1}$-$T_{x5}$ zugeordnet werden; in Figur 4 sind beispielhaft jeweils die sich ergebenden halben Schwingungsdauern eingezeichnet. Daher muss zur Ermittlung des Amplitudenwertes $A(n)$ jeweils die Dauer einer halben Schwingungsdauer ermittelt werden. Dies kann beispielsweise dadurch erfolgen, dass die Abfolge der bandbreitenbegrenzten gefilterten Spannungsmesswerte auf Nulldurchgänge 40 untersucht wird.

Auf diese Weise kann für eine nicht konstante Schwingungsdauer $T_x$ der Abfolge der bandbreitenbegrenzten gefilterten Spanungsmesswerte $f_F(n)$ eine Bestimmung des Amplitudenwertes $A(n)$ gemäß der oben genannten Gleichung durchgeführt werden, indem der veränderliche Wert für $T_x$ jeweils aktuell neu bestimmt wird. Hierzu wird die Abfolge der gefilterten Spannungsmesswerte auf Nulldurchgänge 40 untersucht und die halbe Schwingungsdauer $T_x/2$ als diejenige Zeitdauer bestimmt, die zwischen zwei Nulldurchgängen 40 liegt.

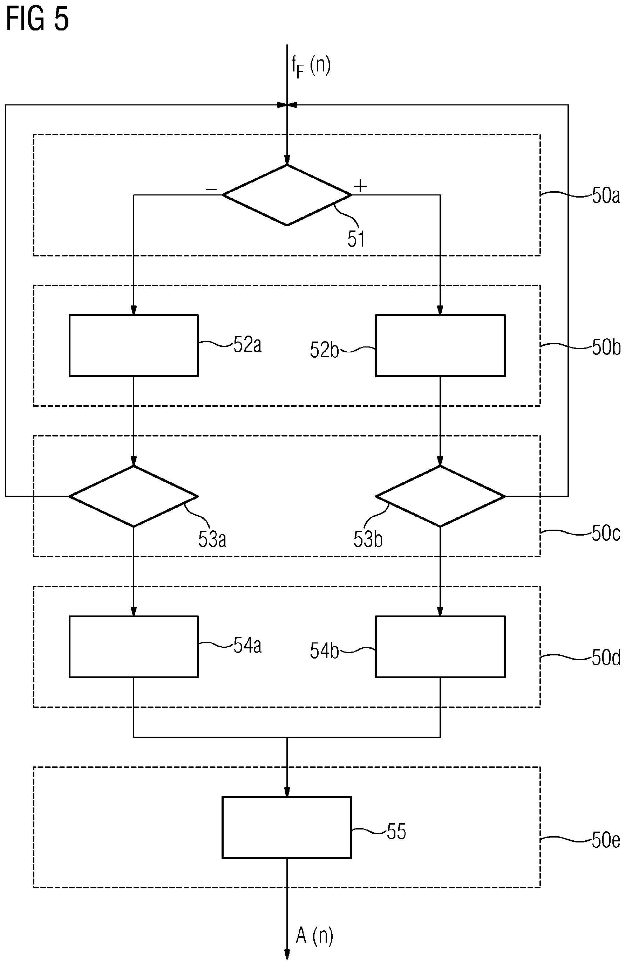

Figur 5 zeigt beispielhaft ein Ablaufschema eines Ausführungsbeispiels zur Ermittlung eines Amplitudenwertes $A(n)$ aus einer Abfolge von bandbreitenbegrenzten gefilterten Spannungsmesswerten $f_F(n)$ (der Einfachheit halber wird im Folgenden auch schlicht von "Werten" gesprochen). Das Vorgehen zur Ermittlung des Amplitudenwertes $A(n)$ ist prinzipiell in fünf Phasen gegliedert, die in Figur 5 durch gestrichelte Kästen angedeutet sind: In einer ersten Phase 50a wird das Vorzeichen eines aktuellen bandbreitenbegrenzten gefilterten Spannungsmesswertes $f_F(n)$ überprüft, in einer zweiten Phase 50b wird die von der bisherigen Abfolge der bandbreitenbegrenzten gefilterten Spannungsmesswerte beschriebene Fläche zwischen dem Kurvenverlauf und der Zeitachse seit dem letzten Nulldurchgang bis zum aktuellen Wert berechnet (vgl. z.B. Fläche 41 in Figur 4), in einer nächsten Phase 50c wird geprüft, ob ein Nulldurchgang vorliegt und in Phase 50d wird die komplette Fläche zwischen dem Kurvenverlauf und der Zeitachse zwischen zwei Nulldurchgängen bestimmt. Schließlich wird in einer abschließenden Phase 50e der Amplitudenwert A(n) unter Einbeziehung der im vorangehenden Schritt 50d bestimmten Fläche berechnet.

Nachfolgend wird das Verfahren zur Bestimmung des Amplitudenwertes A(n) im Einzelnen erläutert.

Während der ersten Phase 50a wird in einem ersten Schritt 51 das Vorzeichen des aktuellen Wertes $f_F(n)$ geprüft. Bei einem negativen Vorzeichen wird das Verfahren in der zweiten Phase 50b bei Schritt 52a, bei einem positiven Vorzeichen bei Schritt 52b fortgesetzt. In den Schritten 52a und 52b wird für die jeweilige negative bzw. positive Halbwelle des Verlaufs der Werte bis zum aktuellen Wert $f_F(n)$ die von dem durch die Abfolge beschriebenen Kurvenverlauf und der Zeitachse eingeschlossene Fläche AR(n) bestimmt. Dies wird für die positive Halbwelle beispielsweise gemäß der folgenden Gleichung

$$AR(n) = AR(n-1) + T_s \cdot \left| f_F(n) \right| \qquad (7a)$$

oder mittels eines Trapeznäherungsverfahrens mit der Gleichung

$$AR(n) = AR(n-1) + 0{,}5 \cdot T_s \cdot \left( \left| f_F(n) \right| + \left| f_F(n-1) \right| \right). \qquad (7b)$$

durchgeführt. Dabei stellt Gleichung (7a) eine direkte Umsetzung der in Gleichung (6) angegebenen Berechnungsvorschrift dar, während die gemäß Gleichung (7b) gewählte Methode eine höhere Genauigkeit bei der Amplitudenberechnung aufweist.

Hierbei steht $T_s$ für das Abtastintervall bei der Digitalisierung der Spanungsmesswerte. Das Verfahren wird entsprechend auch für die negative Halbwelle durchgeführt.

In einem nachfolgenden Schritt 53a bzw. 53b wird in Phase 50c geprüft, ob zwischen dem aktuellen Wert $f_F(n)$ und dem vorangegangen Wert $f_F(n-1)$ ein Nulldurchgang stattgefunden hat. Dies wird daran erkannt, dass die beiden Werte unterschiedliche Vorzeichen aufweisen. Sofern kein Nulldurchgang erkannt worden ist, wird das Verfahren mit dem nächstfolgenden aktuellen Wert fortgesetzt. Sofern jedoch ein Vorzeichenwechsel erkannt wird, wird in Schritten 54a bzw. 54b in Phase 50d die bis dahin berechnete Fläche AR(n) als gesamter Flächeninhalt AR zwischen der letzten Halbwelle und der Zeitachse festgeschrieben und an Schritt 55 in Phase 50e übergeben. Durch die Prüfung auf einen Vorzeichenwechsel und die inkrementelle Berechnung der von dem Kurvenverlauf eingeschlossenen Fläche AR(n) wird gleichsam implizit die halbe Schwingungsdauer $T_x/2$ ermittelt.

In Schritt 55 wird der erhaltene Flächenwert AR dazu genutzt, um den Amplitudenwert zu bestimmen. Dazu kann eine vereinfachte Form der Gleichung (6) verwendet werden, da der mit dem Abtastintervall multiplizierte Summenterm bereits durch den Flächenwert AR angegeben ist. Der Amplitudenwert A(n) kann somit gemäß der folgenden Gleichung bestimmt werden:

$$A(n) = \pi \cdot \frac{f_{nenn}}{2} \cdot AR. \qquad (8)$$

Der beispielsweise auf die beschrieben Art und Weise ermittelte Amplitudenwert A(n) wird gemäß dem Ablaufschema in Figur 2 nunmehr an einen Schritt 24 übergeben, in dem der Amplitudenwert mit einem Schwellenwert $SW_A$ verglichen wird. Sofern der Betrag des Amplitudenwertes A(n) den Schwellenwert $SW_A$ übersteigt, deutet dies auf das Vorliegen einer Ferroresonanzschwingung hin und das Verfahren wird bei Schritt 25 fortgesetzt. Wird der Schwellenwert $SW_A$ hingegen unterschritten, so wird das Verfahren bei Schritt 26 fortgesetzt.

In Schritt 25 wird geprüft, ob die Anzahl der Schwellenwertüberschreitungen eine erste vorgegebene Anzahl $N_1$ überschreitet. Die erste vorgegebene Anzahl $N_1$ kann eingestellt werden und beispielsweise den Wert 100 besitzen. Sofern die erste vorgegebene Anzahl $N_1$ nicht überschritten ist, wird das Verfahren erneut bei Schritt 21 mit Einlesen des nächsten digitalen Spannungsmesswertes $u_d$ fortgesetzt. Sofern hingegen die erste vorgegebene Anzahl $N_1$ überschritten ist, wird das Verfahren bei Schritt 27 fortgesetzt, in dem das Vorliegen einer Ferroresonanzschwingung festgestellt wird und ein entsprechendes Resonanzsignal $S_R$ erzeugt wird. Die Überprüfung in Schritt 25 dient insbesondere zur Stabilisierung des Verfahrens gegen eine verfrühte Auslösung, sofern der Schwellenwert $SW_A$ nur einmal oder wenige Male überschritten wird.

Wenn in der Prüfung in Schritt 24 festgestellt wird, dass der Schwellenwert $SW_A$ nicht überschritten wird, wird in Schritt 26 die Anzahl aufeinanderfolgender Schwellenwertunterschreitungen mit einer zweiten vorgegebenen Anzahl $N_2$ verglichen. Diese zweite vorgegebene Anzahl $N_2$ kann ebenfalls eingestellt werden und kann beispielsweise den Wert 160 besitzen. Sofern die zweite vorgegebene Anzahl $N_2$ überschritten wird, also mehrfach der Schwellenwert $SW_A$ unterschritten wird, wird über einen Rücknahmeeingang 28 des Schrittes 27 die Abgabe des Resonanzsignals $S_R$ zurückgenommen bzw. beendet. Sofern die zweite vorgegebene Anzahl $N_2$ in Schritt 26 nicht überschritten wird, wird das Verfahren bei Schritt 21 mit dem Einlesen des nächsten digitalen Spannungsmesswertes $u_d$ fortgesetzt. Die Überprüfung in Schritt 26 dient insbesondere dazu, ein flackerndes Verhalten eines einmal erzeugten Resonanzsignals $S_R$ zu verhindern, da es nach seiner Erzeugung mindestens die Anzahl $N_2$ aufeinanderfolgende Werte lang aufrechterhalten wird. Dies hat beispielsweise Vorteile bei der Ansteuerung von nachgelagerten Einrichtungen, z.B. einer Dämpfungseinrichtung, durch das Resonanzsignal $S_R$.

Das in Figur 2 in Zusammenhang mit den Figuren 3 bis 5 beschriebene Verfahren stellt lediglich ein mögliches Ausführungsbeispiel des erfindungsgemäßen Verfahrens zur Erkennung des Vorliegens einer Ferroresonanzschwingung dar und soll nicht einschränkend verstanden werden. Im praktischen Einsatz des Verfahrens können beispielsweise bestimmte Verfahrensschritte fehlen oder in anderer Reihenfolge durchgeführt werden.

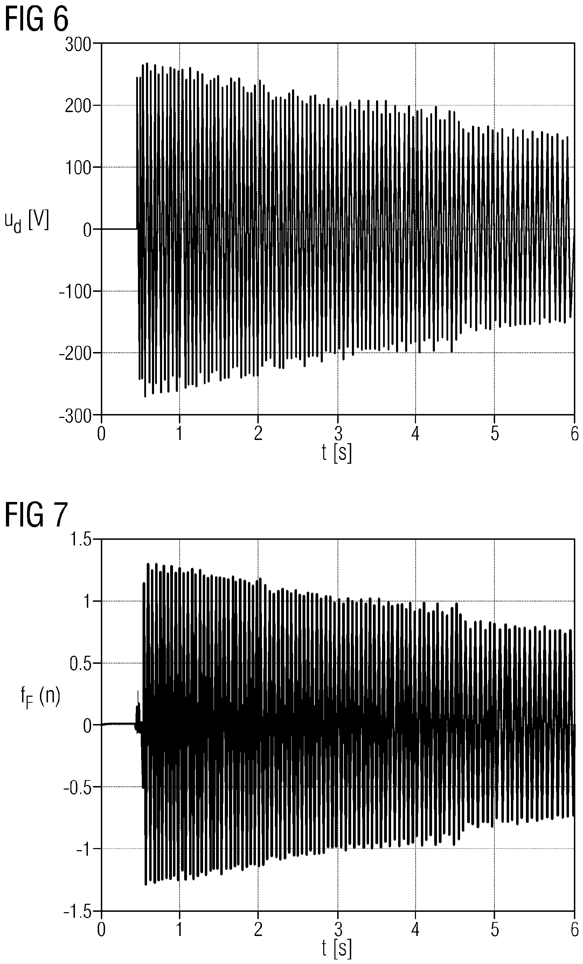

Die nachfolgenden Figuren 6 bis 17 illustrieren beispielhaft bestimmte Verläufe von Spannungsmesswerten $u_d$ und deren Auswertung hinsichtlich des Vorliegens einer Ferroresonanzschwingung.

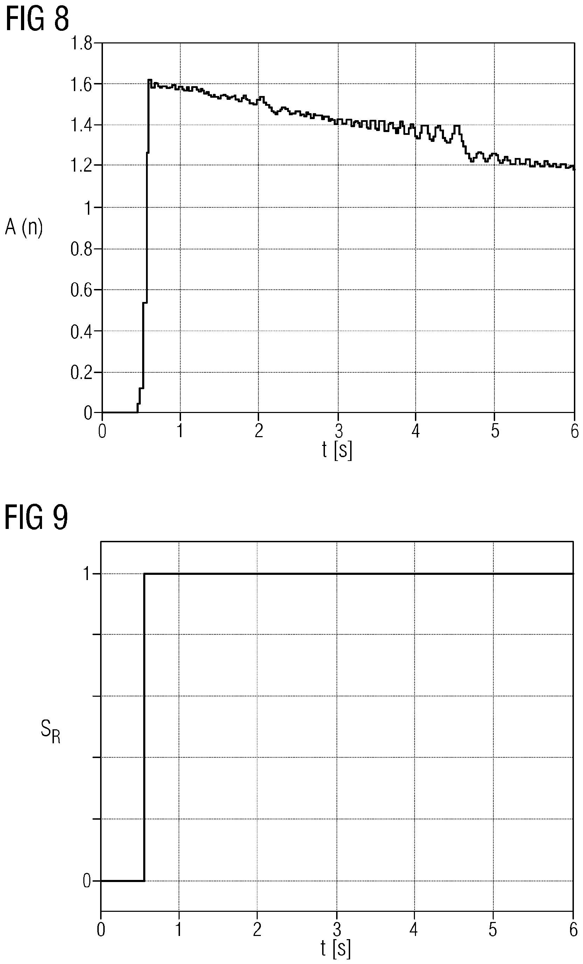

Figuren 6 bis 9 zeigen hierbei einen ersten Beispielfall. In diesem Fall wurde eine Ferroresonanz aufgrund eines Erdfehlers ausgelöst. Figur 6 zeigt die zeitliche Abfolge der aufgenommenen digitalen Spannungsmesswerte $u_d$. Man erkennt deutlich ein Eintreten der Ferroresonanz bei t=0,45s. Figur 7 zeigt den durch Filterung mit dem digitalen Filter und Bandbreitenbegrenzung erzeugten Verlauf gefilterter digitaler Spannungsmesswerte $f_F(n)$ und Figur 8 den Verlauf der daraus ermittelten Amplitudenwerte $A(n)$. Der für den Vergleich mit dem Amplitudenwert herangezogene Schwellenwert $SW_A$ liege für diesen und alle folgenden Beispielfälle bei 0,025. Leicht kann in Figur 8 erkannt werden, dass dieser Schwellenwert $SW_A$ quasi unmittelbar nach Eintreten der Ferroresonanzschwingung dauerhaft überschritten wird, so dass nach Abwarten der durch die erste vorgegebene Anzahl $N_1$ angegebenen Anzahl von Schwellenwertüberschreitungen ein Resonanzsignal $S_R$ erzeugt wird. Dies ist in Figur 9 am Wechsel des binären Signalzustands des Resonanzsignals von 0 auf 1 zu sehen.

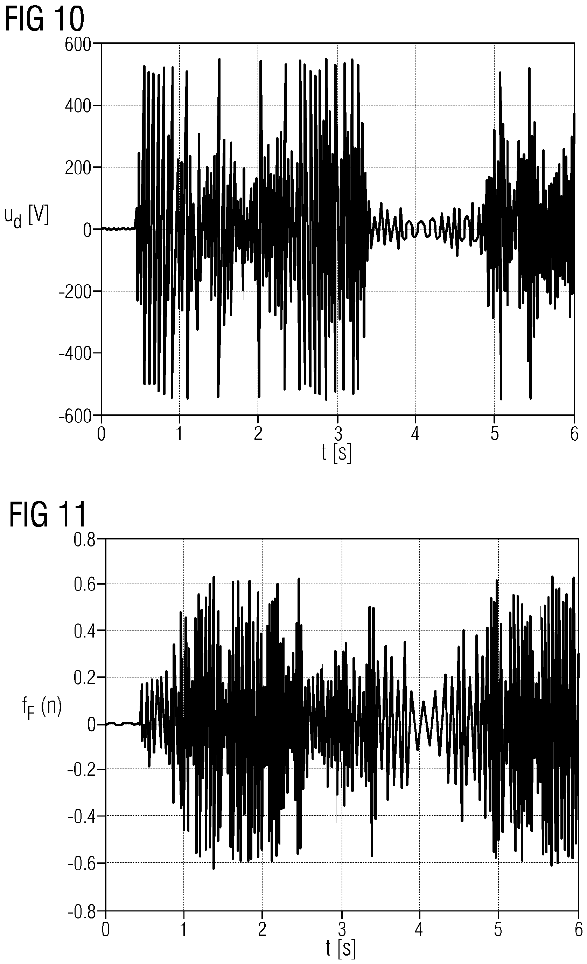

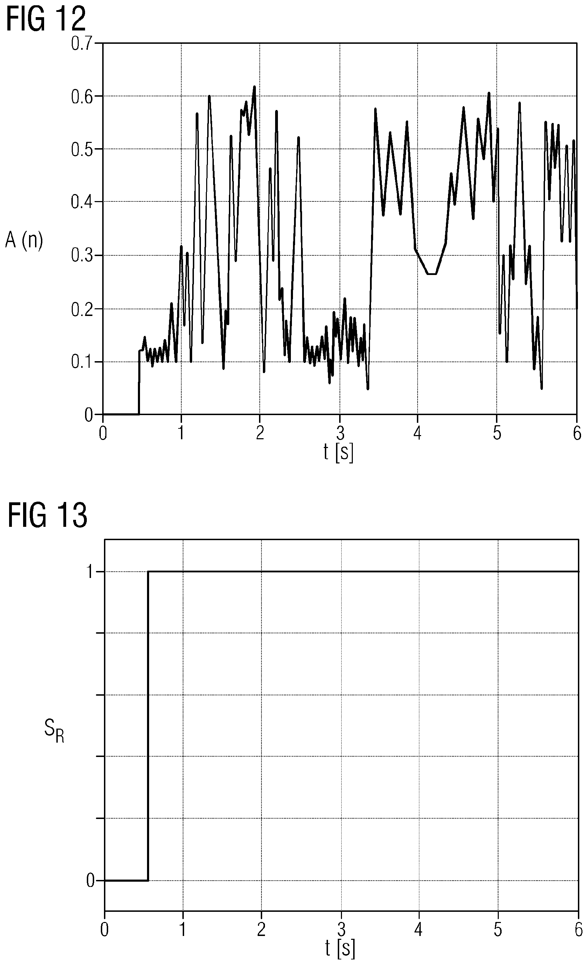

Figuren 10 bis 13 zeigen einen zweiten Beispielfall. In diesem Fall wurde eine chaotische Ferroresonanz aufgrund eines transienten Erdfehlers ausgelöst, die sich durch eine hohe Überspannung und ein nicht-periodisches Verhalten auszeichnet. Figur 10 zeigt die zeitliche Abfolge der aufgenommenen digitalen Spannungsmesswerte $u_d$. Figur 11 zeigt den durch Filterung mit dem digitalen Filter und Bandbreitenbegrenzung erzeugten Verlauf gefilterter digitaler Spannungsmesswerte $f_F(n)$ und Figur 12 den Verlauf der daraus ermittelten Amplitudenwerte $A(n)$. Der Schwellenwert $SW_A$ wird wie in Figur 12 leicht erkannt werden kann, wieder quasi unmittelbar nach Eintreten der Ferroresonanzschwingung dauerhaft überschritten, so dass nach Abwarten der durch die erste vorgegebene Anzahl $N_1$ angegebenen Anzahl von Schwellenwertüberschreitungen das Resonanzsignal $S_R$ erzeugt wird. Dies ist in Figur 13 am Wechsel des binären Signalzustands des Resonanzsignals $S_R$ von 0 auf 1 zu sehen.

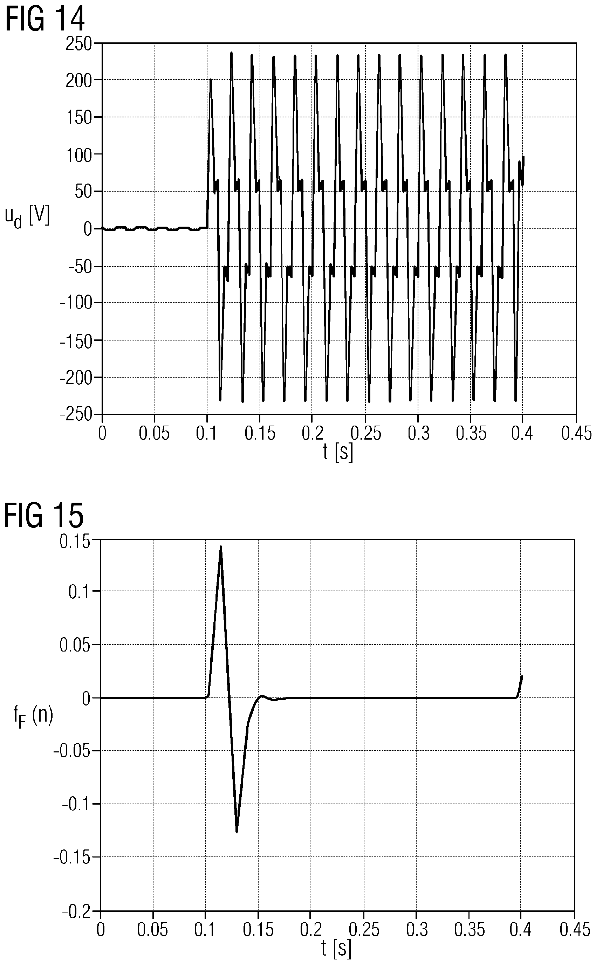

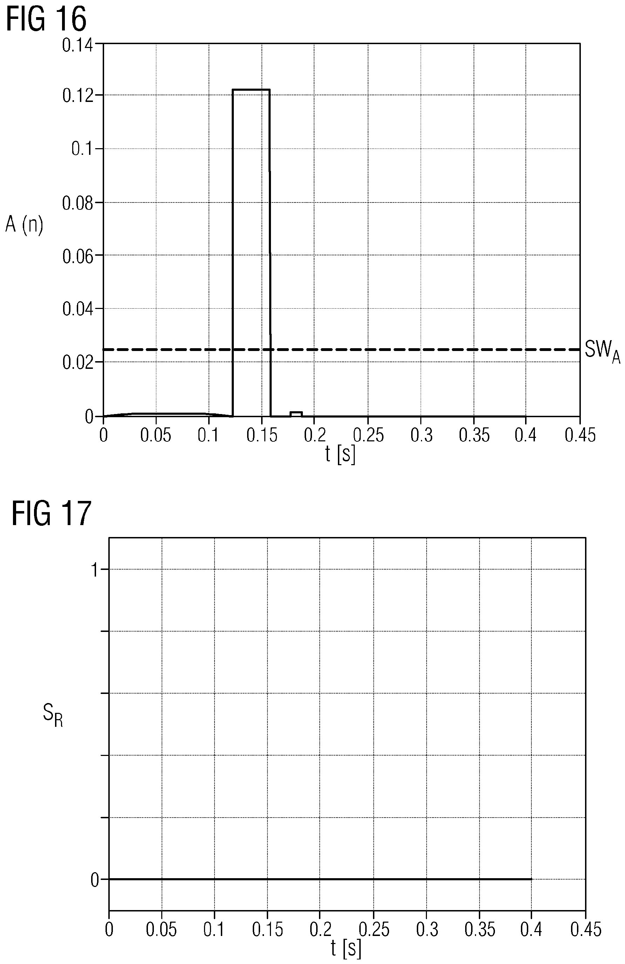

Figuren 14 bis 17 zeigen schließlich einen dritten Beispielfall, diesbezüglich sei auf den im Vergleich zu den Vorgängerfiguren verkürzten Betrachtungszeitraum hingewiesen. In diesem Fall liegt ein sogenannter Lichtbogenfehler in einem Schaltschrank zugrunde, also ein periodischer Spannungsüberschlag z.B. aufgrund einer mangelnden Isolierung eines Leiters. Eine Ferroresonanzschwingung liegt hingegen nicht vor. Figur 14 zeigt die zeitliche Abfolge der aufgenommenen digitalen Spannungsmesswerte $u_d$. Figur 15 zeigt den durch Filterung mit dem digitalen Filter und Bandbreitenbegrenzung erzeugten Verlauf gefilterter digitaler Spannungsmesswerte $f_F(n)$, man erkennt, dass nach einem Einschwingvorgang das Signal konstant bei Werten um Null liegt. Figur 16 zeigt den zugehörigen Verlauf der daraus ermittelten Amplitudenwerte $A(n)$. Der Schwellenwert $SW_A$ wird wie in Figur 16 leicht erkannt werden kann, zwar kurzzeitig überschritten, jedoch liegt die Anzahl der Schwellenwertüberschreitungen unter der vorgegebenen ersten Anzahl $N_1$ der für die Feststellung des Vorliegens einer Ferroresonanzschwingung notwendigen Schwellenwertüberschreitungen. Somit wird konsequenterweise gemäß Figur 17 auch das Resonanzsignals $S_R$ nicht erzeugt. An diesem Beispiel lässt sich die stabilisierende Wirkung des Vergleichs der Anzahl der Schwellenwertüberschreitungen mit der vorgegebenen ersten Anzahl erkennen.

**Patentansprüche**

1. Verfahren zum Erzeugen eines das Vorliegen einer Ferroresonanzschwingung in einer elektrischen Anlage (10) angebenden Resonanzsignals, bei dem

   - digitale Spannungsmesswerte erfasst werden, die eine an einer Messstelle (19) der elektrischen Anlage (10) vorliegende Spannung angeben;
   - die Abfolge der digitalen Spannungsmesswerte auf das Vorliegen einer Ferroresonanzschwingung in der elektrischen Anlage (10) untersucht wird und bei Vorliegen einer Ferroresonanzschwingung das Resonanzsignal erzeugt wird; und

- die digitalen Spannungsmesswerte unter Bildung gefilterter Spannungsmesswerte mit einem digitalen Filter gefiltert werden;

**dadurch gekennzeichnet, dass**

- bezüglich solcher gefilterter Spannungsmesswerte, die eine halbe Schwingungsdauer der Spannung beschreiben, ein die Amplitude der Spannung während dieser halben Schwingungsdauer angebender Amplitudenwert bestimmt wird;
- der Amplitudenwert mit einem Schwellenwert verglichen wird; und
- das Resonanzsignal erzeugt wird, wenn der Amplitudenwert den Schwellenwert übersteigt.

2. Verfahren nach Anspruch 1,
**dadurch gekennzeichnet, dass**

- als digitaler Filter ein Filter mit einer Tiefpasscharakteristik verwendet wird.

3. Verfahren nach Anspruch 2,
**dadurch gekennzeichnet, dass**

- der digitale Filter eine Tiefpasscharakteristik erster Ordnung aufweist.

4. Verfahren nach einem der vorangehenden Ansprüche,
**dadurch gekennzeichnet, dass**

- die digitalen Spannungsmesswerte aus einem Messspannungssignal gebildet werden, das an einer Sekundärseite eines Spannungswandlers (14) abgegriffen wird.

5. Verfahren nach Anspruch 4,
**dadurch gekennzeichnet, dass**

- ein Spannungswandler (14) mit einer als offene Dreiecksschaltung ausgebildeten Sekundärseite verwendet wird.

6. Verfahren nach einem der vorangehenden Ansprüche,
**dadurch gekennzeichnet, dass**

- die Abfolge der gefilterten Spannungsmesswerte vor der Bestimmung des jeweiligen Amplitudenwertes mit einem digitalen Bandpassfilter hinsichtlich ihrer Frequenzbandbreite begrenzt wird.

7. Verfahren nach Anspruch 6,
**dadurch gekennzeichnet, dass**

- der Bandpassfilter die Bandbreite auf ein Frequenzband zwischen etwa 0Hz und etwa der Nennfrequenz der Spannung der elektrischen Anlage begrenzt.

8. Verfahren nach einem der vorangehenden Ansprüche,
**dadurch gekennzeichnet, dass**

- das Resonanzsignal erst dann erzeugt wird, wenn eine erste vorgegebene Anzahl von aufeinanderfolgenden Amplitudenwerten den Schwellenwert übersteigt.

9. Verfahren nach einem der vorangehenden Ansprüche,
**dadurch gekennzeichnet, dass**

- ein vorliegendes Resonanzsignal erst dann zurückgenommen wird, wenn eine zweite vorgegebene Anzahl von aufeinanderfolgenden Amplitudenwerten den Schwellenwert unterschreitet.

10. Verfahren nach einem der vorangehenden Ansprüche,

**dadurch gekennzeichnet, dass**

- der Amplitudenwert jeweils unter Einbeziehung einer durch die gefilterten digitalen Spanungsmesswerte einer halben Schwingungsdauer charakterisierten Fläche (41) bestimmt wird.

**11.** Verfahren nach Anspruch 10,
**dadurch gekennzeichnet, dass**

- zur Ermittlung des Amplitudenwertes jeweils die Dauer einer halben Schwingungsdauer ermittelt wird, indem die Abfolge der gefilterten Spannungsmesswerte auf Nulldurchgänge (40) untersucht wird.

**12.** Verfahren nach einem der vorangehenden Ansprüche,
**dadurch gekennzeichnet, dass**

- eine Schutzfunktion eines die elektrische Anlage (10) überwachenden elektrischen Schutzgerätes blockiert wird, solange das Resonanzsignal vorliegt.

**13.** Verfahren nach einem der vorangehenden Ansprüche,
**dadurch gekennzeichnet, dass**

- bei vorliegendem Resonanzsignal eine Alarmmeldung an einen Betreiber der elektrischen Anlage (10) übermittelt wird.

**14.** Verfahren nach einem der vorangehenden Ansprüche,
**dadurch gekennzeichnet, dass**

- bei vorliegendem Resonanzsignal eine in der elektrischen Anlage (10) vorgesehene Dämpfungseinrichtung (17) aktiviert wird, die eine Dämpfung der Ferroresonanzschwingung bewirkt.

**15.** Einrichtung (15) zum Erzeugen eines das Vorliegen einer Ferroresonanzschwingung in einer elektrischen Anlage (10) angebenden Resonanzsignals, mit

- einer Messeinrichtung zur Erfassung digitaler Spannungsmesswerte, die eine an einer Messstelle der elektrischen Anlage vorliegende Spannung angeben; und
- einer Auswerteeinrichtung zur Untersuchung der Abfolge der digitalen Spannungsmesswerte auf das Vorliegen einer Ferroresonanzschwingung in der elektrischen Anlage und zur Erzeugung des Resonanzsignals bei Vorliegen einer Ferroresonanzschwingung;
**dadurch gekennzeichnet, dass**
- die Auswerteeinrichtung zur Durchführung eines Verfahrens gemäß einem der Ansprüche 1 bis 14 ausgebildet ist.


**Claims**

**1.** Method for generating a resonance signal indicating the presence of a ferroresonant oscillation in an electrical system (10), in which

- digital voltage measured values which indicate a voltage present at a measurement point (19) of the electrical system (10) are captured;
- the sequence of digital voltage measured values is examined for the presence of a ferroresonant oscillation in the electrical system (10) and the resonance signal is generated if a ferroresonant oscillation is present; and
- the digital voltage measured values are filtered using a digital filter so as to form filtered voltage measured values; **characterized in that**
- with respect to such filtered voltage measured values which describe half an oscillation period of the voltage, an amplitude value indicating the amplitude of the voltage during this half an oscillation period is determined;
- the amplitude value is compared with a threshold value; and
- the resonance signal is generated if the amplitude value exceeds the threshold value.

**2.** Method according to Claim 1,
**characterized in that**

- a filter with a low-pass characteristic is used as the digital filter.

**3.** Method according to Claim 2,
**characterized in that**

- the digital filter has a first-order low-pass characteristic.

**4.** Method according to one of the preceding claims,
**characterized in that**

- the digital voltage measured values are formed from a measurement voltage signal which is tapped off on a secondary side of a voltage transformer (14).

**5.** Method according to Claim 4,
**characterized in that**

- a voltage transformer (14) with a secondary side in the form of an open delta circuit is used.

**6.** Method according to one of the preceding claims,
**characterized in that**

- the sequence of filtered voltage measured values is limited with respect to its frequency bandwidth using a digital bandpass filter before determining the respective amplitude value.

**7.** Method according to Claim 6,
**characterized in that**

- the bandpass filter limits the bandwidth to a frequency band between approximately 0 Hz and approximately the nominal frequency of the voltage of the electrical system.

**8.** Method according to one of the preceding claims,
**characterized in that**

- the resonance signal is generated only when a first predefined number of successive amplitude values exceed the threshold value.

**9.** Method according to one of the preceding claims,
**characterized in that**

- a resonance signal which is present is withdrawn only when a second predefined number of successive amplitude values undershoot the threshold value.

**10.** Method according to one of the preceding claims,
**characterized in that**

- the amplitude value is respectively determined with the inclusion of an area (41) **characterized by** the filtered digital voltage measured values of half an oscillation period.

**11.** Method according to Claim 10,
**characterized in that**

- in order to determine the amplitude value, the duration of half an oscillation period is respectively determined by examining the sequence of filtered voltage measured values for zero crossings (40).

**12.** Method according to one of the preceding claims,

**characterized in that**

- a protective function of an electrical protective device monitoring the electrical system (10) is blocked as long as the resonance signal is present.

**13.** Method according to one of the preceding claims,
**characterized in that**

- an alarm message is transmitted to an operator of the electrical system (10) if the resonance signal is present.

**14.** Method according to one of the preceding claims,
**characterized in that**

- an attenuation device (17) which is provided in the electrical system (10) and attenuates the ferroresonant oscillation is activated if the resonance signal is present.

**15.** Device (15) for generating a resonance signal indicating the presence of a ferroresonant oscillation in an electrical system (10), having

- a measuring device for capturing digital voltage measured values which indicate a voltage present at a measurement point of the electrical system; and
- an evaluation device for examining the sequence of digital voltage measured values for the presence of a ferroresonant oscillation in the electrical system and for generating the resonance signal if a ferroresonant oscillation is present;

**characterized in that**

- the evaluation device is designed to carry out a method according to one of Claims 1 to 14.


**Revendications**

**1.** Procédé de production d'un signal de résonance indiquant la présence d'une oscillation ferrorésonante dans une installation (10) électrique, dans lequel

- on relève des valeurs numériques de mesure de tension, qui indiquent une tension présente en un point (19) de mesure de l'installation (10) électrique ;
- on étudie la suite des valeurs numériques de mesure de tension pour déterminer la présence d'une oscillation de ferrorésonance dans l'installation (10) électrique et, en présence d'une oscillation de ferrorésonance, on produit le signal de résonance et
- on filtre, par un filtre numérique, les valeurs numériques de mesure de tension, en formant des valeurs filtrées de mesure de tension,

**caractérisé en ce que**

- pour les valeurs filtrées de mesure de tension, qui décrivent une demi-période d'oscillation de la tension, on définit une valeur d'amplitude indiquant l'amplitude de la tension pendant cette demi-période d'oscillation ;
- on compare la valeur d'amplitude à une valeur de seuil et
- on produit le signal de résonance, si la valeur d'amplitude dépasse la valeur de seuil.

**2.** Procédé suivant la revendication 1,
**caractérisé en ce que**

- on utilise, comme filtre numérique, un filtre ayant une caractéristique de passe-bas.

**3.** Procédé suivant la revendication 2,
**caractérisé en ce que**

- le filtre numérique a une caractéristique de passe-bas du premier ordre.

**4.** Procédé suivant l'une des revendications précédentes,
**caractérisé en ce que**

- on forme les valeurs numériques de mesure de tension à partir d'un signal de tension de mesure prélevé au côté secondaire d'un transformateur (14) de tension.

**5.** Procédé suivant la revendication 4,
**caractérisé en ce que**

- on utilise un transformateur (14) de tension ayant un côté secondaire constitué sous la forme d'un circuit en triangle ouvert.

**6.** Procédé suivant l'une des revendications précédentes,
**caractérisé en ce que**

- on limite, en ce qui concerne sa largeur de bande de fréquence, par un filtre numérique passe-bande, la suite des valeurs filtrées de mesure de tension, avant la détermination de la valeur d'amplitude.

**7.** Procédé suivant la revendication 6,
**caractérisé en ce que**

- le filtre passe-bande limite la largeur de bande à une bande de fréquence entre environ 0 Hz et environ la fréquence nominale de la tension de l'installation électrique.

**8.** Procédé suivant l'une des revendications précédentes,
**caractérisé en ce que**

- on ne produit de signal de résonance que lorsqu'un premier nombre donné à l'avance de valeurs d'amplitude successives dépasse la valeur de seuil.

**9.** Procédé suivant l'une des revendications précédentes,
**caractérisé en ce que**

- on ne diminue un signal de résonance présent que lorsqu'un deuxième nombre donné à l'avance de valeurs d'amplitude successives est inférieur à la valeur de seuil.

**10.** Procédé suivant l'une des revendications précédentes,
**caractérisé en ce que**

- on détermine la valeur d'amplitude, en intégrant une surface (41) **caractérisée par** les valeurs numériques filtrées de valeurs de tension d'une demi-période d'oscillation.

**11.** Procédé suivant la revendication 10,
**caractérisé en ce que**

- pour déterminer la valeur d'amplitude, on détermine la durée d'une demi-période d'oscillation, en étudiant les passages (40) par zéro dans la suite des valeurs filtrées de mesure de tension.

**12.** Procédé suivant l'une des revendications précédentes,
**caractérisé en ce que**

- on bloque une fonction de protection d'un appareil de protection électrique contrôlant l'installation (10) électrique, tant que le signal de résonance est présent.

**13.** Procédé suivant l'une des revendications précédentes,
**caractérisé en ce que**

- lorsque le signal de résonance est présent, on envoie un message d'alerte à un exploitant de l'installation (10) électrique.

**14.** Procédé suivant l'une des revendications précédentes, **caractérisé en ce que**

- lorsque le signal de résonance est présent, on active un dispositif (17) d'amortissement, qui est prévu dans l'installation (10) électrique et qui provoque un amortissement de l'oscillation de ferrorésonance.

**15.** Dispositif (15) de production d'un signal de résonance indiquant la présence d'une oscillation de ferrorésonance dans une installation (10) électrique, comprenant

- un dispositif de mesure pour relever des valeurs numériques de mesure de tension, qui indiquent une tension présente en un point de mesure de l'installation électrique et
- un dispositif d'exploitation pour rechercher, dans la suite des valeurs numériques de mesure de tension, la présence d'une oscillation de ferrorésonance dans l'installation électrique et pour produire le signal de résonance en présence d'une oscillation de ferrorésonance ;

**caractérisé en ce que**

- le dispositif d'exploitation est constitué pour effectuer un procédé suivant l'une des revendications 1 à 14.

# FIG 1

## FIG 2

FIG 3

FIG 4

# FIG 5

$f_F(n)$

51

50a

52a
52b
50b

53a
53b
50c

54a
54b
50d

55
50e

$A(n)$

FIG 6

FIG 7

FIG 8

FIG 9

FIG 10

FIG 11

## FIG 12

## FIG 13

FIG 14

FIG 15

FIG 16

FIG 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H10243549 A

- WO 2011150985 A1

**In der Beschreibung aufgeführte Nicht-Patentliteratur**

- **Z. BO ; L. TIECHENG.** Power and Energy Engineering Conference. IEEE, 2009

- **G. MOKRYANI ; M.-R. HAGHIFAM ; H. LATAFAT ; P. ALIPARAST ; A. ABDOLAHI.** The 15th International Conference on Intelligent System Applications to Power Systems. IEEE, 2009